# EUROPEAN PATENT SPECIFICATION

(11) **EP 2 757 839 B1**
(45) Date of publication and mention of the grant of the patent: **02.09.2015**
(21) Application number: 14165069.7
(22) Date of filing: 16.03.2011
(51) Int. Cl.: H04W 52/02, G06F 1/32

(54) **Power management method and apparatus for network access module**
LEISTUNGSVERWALTUNGSVERFAHREN UND -VORRICHTUNG EINERS NETZWERKZUGRIFFSMODULS
PROCÉDÉ ET APPAREIL DE GESTION D'ÉNERGIE D'UN MODULE D'ACCÈS RÉSEAU

(30) Priority: 16.03.2010 CN 201010127077
(43) Date of publication of application: 23.07.2014
(62) Divisional of application: 11755666.2
(73) Proprietor: Huawei Device Co., Ltd., Longgang District Shenzhen Guangdong 518129 (CN)
(72) Inventor: Tian, Yubo, 518129 Shenzhen (CN)
(74) Representative: Pfenning, Meinig & Partner GbR

(56) References cited:
- US-A1- 2004 121 802

## Description

### FIELD OF THE INVENTION

The present invention relates to the field of electronic products, and in particular, to a power management method and apparatus for a network access module.

### BACKGROUND OF THE INVENTION

At present, there are more and more types of terminal devices, which may include a desktop computer terminal device, a netbook, a mobile Internet device (MID), a mobile phone, and so on. With the development of technologies, there are also more and more wireless network access applications in which a terminal device is involved, which causes that power consumption of a network access module in the terminal device is also increased gradually, and therefore, power management of the network access module attracts more and more attention.

The foregoing network access module includes an embedded module, a machine to machine (M2M) module, a board to board (B2B) module, and so on. Power management of these network access modules indicates that when a user does not use a network service function (such as a voice service, a short message service, a data service, a GPS service, and so on), the network access module may enter a low power consumption state, thereby reducing electricity consumption and extending usage time of a battery in the terminal device.

At present, the foregoing network access module is generally integrated inside the terminal device, and communicates with the terminal device through a universal serial bus (USB) protocol, which is equivalent to that the network access module is connected to the terminal device through an external USB interface. Existing power management of the network access module includes the following cases:
1. After closing background software that is corresponding to the network access module, disconnect a USB directly to enter a power saving mode;
2. Do not disconnect a USB, but close background software that is corresponding to the network access module to enter a power saving mode; and
3. Neither disconnect a USB nor close background software that is corresponding to the network access module, but close a radio frequency to enter a power saving mode.

US 2004-0121802 A1 describes a hybrid mobile terminal for performing a personal digital assistant function and a mobile phone function. The hybrid mobile terminal includes a PDA function module for controlling the PDA function, generating a general purpose input output signal for initiating a mobile phone function on the basis of a prescribed condition for initiating the mobile phone function and generating a termination command for terminating the mobile phone function on the basis of the prescribed condition for terminating the mobile phone function; and a mobile phone function module for controlling the mobile phone function after being activated upon receiving one of the GPIO signal received from the PDA function module and a power key entry signal of the hybrid mobile terminal.

However, the prior art still has the following problem: The terminal device interacts with the network access module through the USB protocol, and the network access module can be queried only after the network access module is woken up from a low power consumption state, and therefore, actually whether the network access module is in a low power consumption state cannot be queried, which is not conducive for the terminal device to control the network access module.

### SUMMARY OF THE INVENTION

Embodiments of the present invention provide a power management method and apparatus for a network access module, so that it is convenient for a terminal device to know a state of a network access module, thereby enhancing control of the network access module by the terminal device.

In one aspect, an embodiment of the present invention provides a power management method for a network access module, where the method includes: receiving, through a general purpose input output (GPIO) pin, a power management command sent by a terminal device; performing switching between a working state and a low power consumption state according to the power management command; and feeding a state of the network access module after switching back to the terminal device.

In another aspect, an embodiment of the present invention provides a power management apparatus for a network access module, where the apparatus includes: a command receiving unit, configured to receive, through a GPIO pin, a power management command sent by a terminal device; a switching unit, configured to perform switching between a working state and a low power consumption state according to the power management command; and a feedback unit, configured to feed a state of the network access module after switching back to the terminal device.

In another aspect, an embodiment of the present invention further provides a network access module including the foregoing power management apparatus for a network access module, and provides a terminal device including the foregoing power management apparatus for a network access module.

In the embodiments of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device.

### BRIEF DESCRIPTION OF THE DRAWINGS

To describe the technical solutions in the embodiments of the present invention more clearly, the accompanying drawings required for describing the embodiments are introduced briefly in the following. Apparently, the accompanying drawings in the following description are only some embodiments of the present invention, and persons of ordinary skill in the art may also derive other drawings according to these accompanying drawings without creative efforts.
FIG. 1 is a schematic flowchart of a power management method for a network access module according to an embodiment of the present invention;
FIG. 2 is a schematic diagram showing a connection between a network access module and a terminal device according to an embodiment of the present invention;
FIG. 3 is a schematic flowchart of another power management method for a network access module according to an embodiment of the present invention;
FIG. 4 is a schematic flowchart of another power management method for a network access module according to an embodiment of the present invention;
FIG. 5 is a schematic structural diagram of a power management apparatus for a network access module according to an embodiment of the present invention; and
FIG. 6 is a schematic structural diagram of another power management apparatus for a network access module according to an embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative efforts shall fall within the protection scope of the present invention.

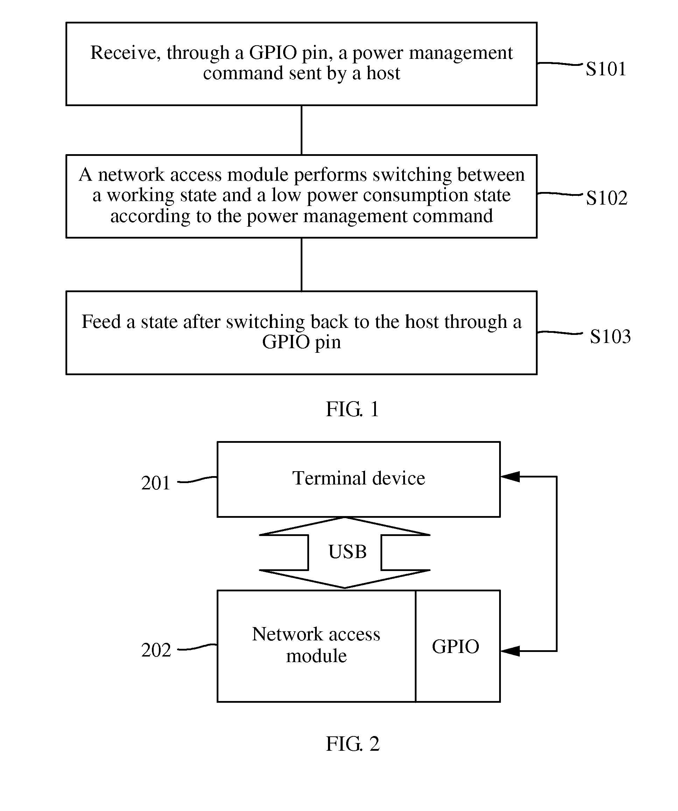

FIG. 1 is a schematic flowchart of a power management method for a network access module according to an embodiment of the present invention. In this embodiment, the present invention is described from a network access module side, and the method includes the following steps:

S101: Receive, through a GPIO pin, a power management command sent by a terminal device.

FIG. 2 is a schematic diagram showing a connection between a network access module and a terminal device according to an embodiment of the present invention. In this embodiment, a network access module 202 and a terminal device 201 may interact with each other in two manners: One is through a USB protocol, and the other is through a GPIO pin. In terms of a physical connection, the foregoing two interaction manners are as follows: For the USB protocol, peripheral component interconnect (PCI) is converted to a USB, for example, USB interaction is performed through 4 PINs that are on a mini PCI-E, where two of the 4 PINs are for power supply and two of the 4 PINs are for data; and for the GPIO, the terminal device may lead out pins, which are connected to PINs on a mini PCI-E slot, and a network access module is connected to a GPIO pin of a chip inside the network access module through a corresponding PIN on a connecting finger, and when the network access module is inserted into the mini PCI-E slot, the PIN on the connecting finger in the network access module contacts with the corresponding PIN on the mini PCI-E slot, so that the GPIO pin of the chip inside the network access module is connected with the terminal device.

In this embodiment, the terminal device 201 may send, by changing a level of a PIN on the mini PCI-E slot to make a level of the GPIO pin in the network access module 202 change, a power management command to the network access module. Specifically, a level of a designated GPIO pin in the network access module 202 may be changed to represent a certain power management command, and such a corresponding relationship between a level and a power management command may be preset. For example, the terminal device 201 may set a level of a designated GPIO pin in the network access module 202 to a high level, which is used to indicate that the network access module is allowed to enter a low power consumption state, and at the same time, the terminal device 201 may set the level of the GPIO pin to a low level, which is used to indicate that the network access module is enabled to enter a working state. Definitely, the embodiment of the present invention is not limited to the foregoing level configuration manner, and any other possible preset configuration manner falls within the scope of the embodiment of the present invention.

S102: The network access module performs switching between a working state and a low power consumption state according to the power management command.

After detecting a change of the level of the foregoing designated GPIO pin, the network access module 202 performs switching between its states according to a preset power management command that is corresponding to a changed level. In this embodiment, the low power consumption state may be: a state in which a processor of the network access module stops working; or, a state in which a signal from a network side is intermittently received; or, a state in which a processor works at a reduced frequency, an interruption that can be used for waking up is maintained, and power supply for a part of components is stopped; or, a state in which there is only a voltage but no current, and overall power consumption is obviously reduced as compared with the working state.

S103: Feed a state after switching back to the terminal device through a GPIO pin.

In this embodiment, the network access module 202 may feed a current state back to the terminal device through a designated GPIO pin. For example, a level of the GPIO pin is set to a high level to represent that the network access module 202 is in a working state currently, and the level of the GPIO pin is set to a low level to represent that the network access module 202 is in a low power consumption state currently. It should be noted that, the GPIO pin for feeding back the state and the foregoing GPIO pin for receiving the power management command are different GPIO pins.

In this embodiment, the terminal device may obtain the current state of the network access module 202 in two manners: One is that after setting the GPIO pin to a high/low level, the network access module 202 may notify a host through a pulse signal, so that the host knows the current state of the network access module, and in this case, if the host is in a standby state, the host may be set that the host is not woken up by the signal when the host is in the standby state; and the other is that the host queries a level of the GPIO pin to know the current state of the network access module.

In this embodiment of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device.

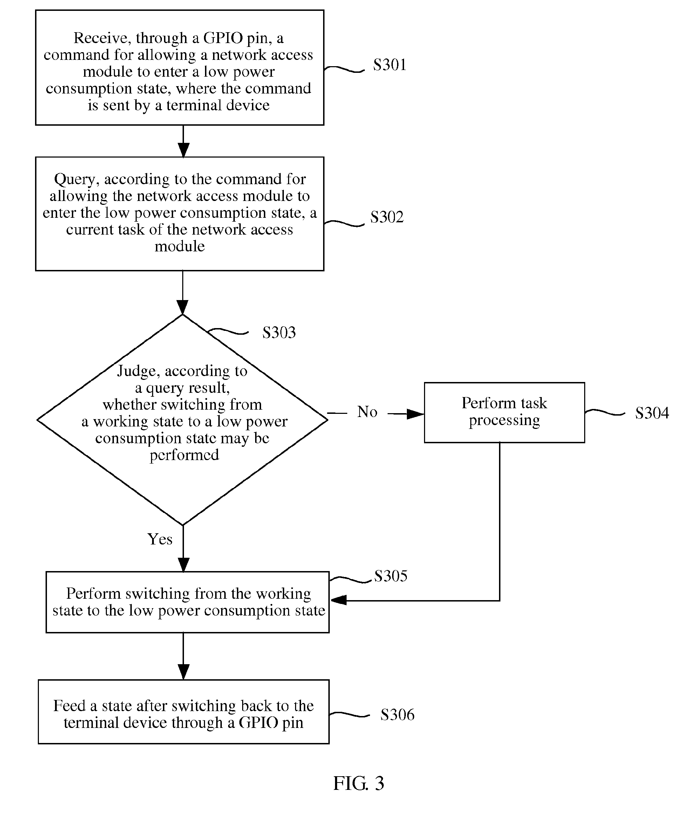

FIG. 3 is a schematic flowchart of another power management method for a network access module according to an embodiment of the present invention. This embodiment of the present invention is also described from a network access module side, and the method includes the following steps:

S301: Receive, through a GPIO pin, a command for allowing a network access module to enter a low power consumption state, where the command is sent by a terminal device. When determining that no service needs to be processed temporarily, the terminal device may set a level of a certain designated GPIO pin of the network access module to allow the network access module to enter a low power consumption state.

As an embodiment of the present invention, the foregoing low power consumption state includes at least a power consumption state of one level. When the foregoing low power consumption state includes power consumption states of multiple levels, for example, includes three kinds of low power consumption states: a higher level, a medium level and a lowest level, the network access module may determine, according to a condition of a current task, to enter a power consumption state of which level. In this way, normal operation of a current task may be ensured, and furthermore, an effect of reducing power consumption of the terminal device may be achieved.

S302: Query, according to the foregoing command for allowing the network access module to enter the low power consumption state, a current task of the network access module, where the command is sent by the terminal device.

When a host determines that no service needs to be continued, the network access module may still be processing some tasks. For example, a user does not perform any operation, but the terminal device undergoes cell handover, moves between an area with a signal and an area without a signal, and so on. In this case, the terminal device allows the network access module to enter the low power consumption state, but the network access module needs to process these events independently, and then enters the low power consumption state; and otherwise, a system exception is caused. Therefore, to avoid an exception that occurs to the system, the network access module may perform task query, and then perform a further operation according to a query result.

S303: Judge, according to the query result, whether switching from a working state to a low power consumption state may be performed.

When the network access module queries and finds, through step S302, that no ongoing task exists, proceed to step S305, and when the network access module queries and finds that an ongoing task exists, proceed to step S304.

S304: Perform task processing, and proceed to step S305 after processing of an ongoing task is finished.

As another embodiment of the present invention, when querying and finding that an ongoing task exists, the network access module may also directly refuse to perform switching from a working state to a low power consumption state, and feed back the information to the terminal device without performing step S304.

S305: Perform switching from the working state to the low power consumption state.

S306: Feed a state after switching back to the terminal device through a GPIO pin.

Step S306 is similar to step S103, but it should be noted that, when the foregoing low power consumption state includes power consumption states of multiple levels, which causes that one GPIO pin cannot represent all states of the network access module, the network access module may use a combination of levels on multiple GPIO pins to represent all states of the network access module.

In this embodiment of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device. In addition, in this embodiment of the present invention, a function that a host of the terminal device is woken up by an incoming call may also be implemented through a GPIO pin.

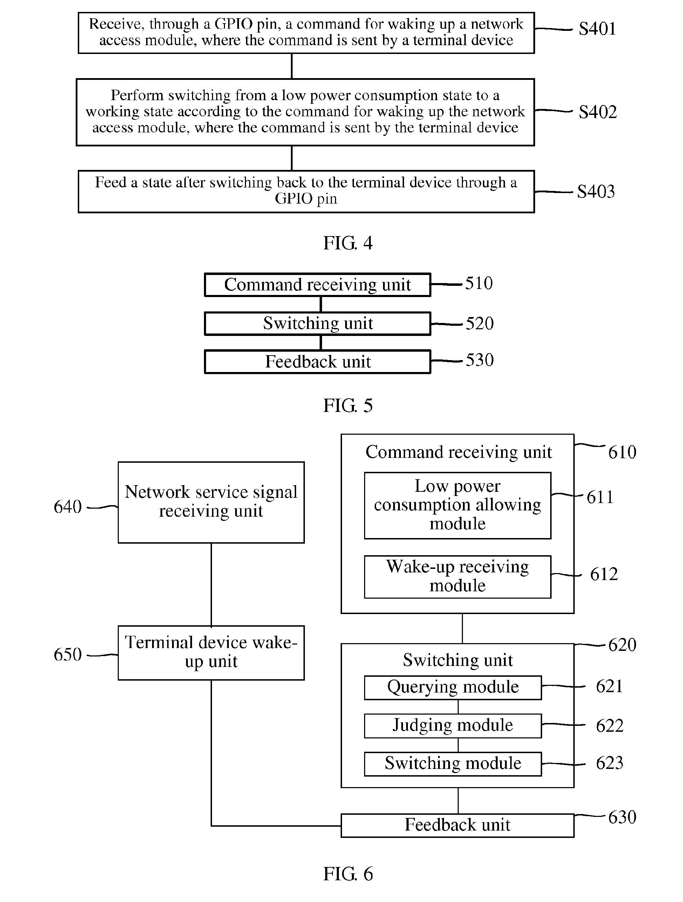

As an embodiment of the present invention, as shown in FIG. 4, a method according to this embodiment of the present invention may further include the following steps:

S401: Receive, through a GPIO pin, a command for waking up a network access module, where the command is sent by a terminal device.

When the terminal device needs to perform a certain service, it may enable the network access module to enter a working state by setting a level of a certain designated GPIO pin of the network access module. It should be noted that, the GPIO pin for receiving a wake-up command and the GPIO pin for receiving the command for allowing entering a low power consumption state in the embodiment that is corresponding to FIG. 3 may be the same pin, and may also be different pins.

S402: Perform switching from a low power consumption state to a working state according to the command for waking up the network access module, where the command is sent by the terminal device.

The sending of the command for waking up the network access module is implemented by the terminal device through setting a level of a certain designated GPIO pin of the network access module, and after the terminal device sets the level of the GPIO pin, the network access module can sense a change of the level of the GPIO pin at once, thereby enabling itself to perform switching from a low power consumption state to a working state.

S403: Feed a state after switching back to the terminal device through a GPIO pin.

Step S403 is similar to step S306, and is not described here again.

In this embodiment of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device. In addition, in this embodiment of the present invention, a function that a host is woken up by an incoming call may also be implemented through a GPIO pin.

In the embodiments of FIG. 3 and FIG. 4, an aspect that the power management of the network access module is regulated by the terminal device is described; however, the power management of the network access module not only involves regulation of the terminal device itself, but also may include regulation of some external factors. For example, when the network access module is in a low power consumption state and receives some network service signals such as an incoming call, a short message, and so on, not only the network access module may be woken up from the low power consumption state, that is, may perform switching from the low power consumption state to a working state, but also the terminal device may further be woken up. Therefore, the power management method for a network access module in this embodiment of the present invention may further include the following steps:
after switching from the low power consumption state to the working state according to a network service signal, waking up the terminal device through a GPIO pin, and feeding the state after switching back to the terminal device through a GPIO pin.

For example, when the network access module enters a low power consumption state, a level of a certain designated GPIO pin is set to a preset state, such as a high level; after receiving the foregoing network service signal, the network access module in the low power consumption state is automatically woken up first, that is, switches from the low power consumption state to a working state; and then, after being automatically woken up, the network access module changes the level of the designated GPIO pin to a low level, thereby interrupting the terminal device and waking up the terminal device.

Therefore, in this embodiment of the present invention, a function that the network access module in the low power consumption state wakes up the terminal device when receiving a network service signal may also be implemented.

FIG. 5 is a schematic structural diagram of a power management apparatus for a network access module according to an embodiment of the present invention. In actual use, the apparatus may be a network access module, and may also be a unit in a network access module.

The power management apparatus for a network access module includes: a command receiving unit 510, a switching unit 520, and a feedback unit 530, where the switching unit 520 is connected to the receiving unit 510 and the feedback unit 530 respectively.

The command receiving unit 510 is configured to receive, through a GPIO pin, a power management command sent by a terminal device. In this embodiment, the terminal device may make a level of a corresponding GPIO pin in a network access module change by changing a level of a PIN on a mini PCI-E slot; where the PIN on the mini PCI-E slot contacts with a corresponding PIN on a connecting finger of the network access module, and a GPIO pin inside the network access module is connected to a PIN on the connecting finger, so that the terminal device may make the level of the GPIO pin in the network access module change by changing the level of the PIN on the mini PCI-E slot. In this way, a power management command may be sent to the network access module by changing the level of the GPIO pin in the network access module, and such a corresponding relationship between a level and a power management command may be preset. For example, the terminal device may set a level of a designated GPIO pin in the network access module to a high level, which is used to indicate that the network access module is allowed to enter a low power consumption state, and set the level of the GPIO pin to a low level, which is used to indicate that the network access module is woken up and enabled to enter a working state. Definitely, the embodiment of the present invention is not limited to the foregoing level configuration manner, and any other possible preset configuration manner falls within the scope of the embodiment of the present invention.

The switching unit 520 is configured to enable the network access module to perform switching between a working state and a low power consumption state according to the power management command. The switching module 520 may detect a change of the level on the foregoing designated GPIO pin, and perform switching between its states according to a preset power management command that is corresponding to a changed level.

The feedback unit 530 is configured to feed a state after switching back to the terminal device through a GPIO pin.

In this embodiment, the feedback unit 530 may feed back a current state to the terminal device through a designated GPIO pin. For example, a level of the GPIO pin is set to a high level to represent that the network access module is in a working state currently, and the level of the GPIO pin is set to a low level to represent that the network access module is in a low power consumption state currently.

In this embodiment of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device.

FIG. 6 is a schematic structural diagram of another power management apparatus for a network access module according to an embodiment of the present invention. In actual use, the apparatus may be a network access module, and may also be a unit in a network access module. The apparatus includes: a command receiving unit 610, a switching unit 620, a feedback unit 630, a network service signal receiving unit 640, and a terminal device wake-up unit 650.

The command receiving unit 610 includes a low power consumption allowing module 611 and a wake-up receiving module 612.

The low power consumption allowing module 611 is configured to receive, through a GPIO pin, a command for allowing a network access module to enter a low power consumption state, where the command is sent by a terminal device. When the terminal device determines that no service needs to be processed temporarily, the terminal device may allow the network access module to enter a low power consumption state by setting a level of a certain designated GPIO pin of the network access module, and at this time, the low power consumption allowing module 611 may judge, by querying the level of the designated GPIO pin, whether the command for allowing the network access module to enter the low power consumption state is received, where the command is sent by the terminal device.

The wake-up receiving module 612 is configured to receive, through a GPIO pin, a command for waking up the network access module, where the command is sent by the terminal device. When the terminal device needs to perform a certain service, the terminal device may enable the network access module to enter a working state by setting a level of a certain designated GPIO pin of the network access module, and at this time, hardware interruption occurs in the wake-up receiving module 612 since a change of the level of the designated GPIO pin is received, thereby waking up the network access module.

As an embodiment of the present invention, the foregoing low power consumption state includes at least a power consumption state of one level, and when the foregoing low power consumption state includes power consumption states of multiple levels, for example, includes three kinds of low power consumption states: a higher level, a medium level and a lowest level, the network access module may determine, according to a condition of a current task, to enter a power consumption state of which level. In this way, normal operation of a current task may be ensured, and furthermore, an effect of reducing power consumption of the terminal device may be achieved.

The switching unit 620 includes a querying module 621, a judging module 622, and a switching module 623.

The querying module 621 is connected to the foregoing low power consumption allowing module 611, and the querying module 621 is configured to query, according to the foregoing command for allowing the network access module to enter the low power consumption state, a current task of the network access module. When a host determines that no service needs to be continued, the network access module may still be processing some tasks. For example, a user does not perform any operation, but the terminal device undergoes cell handover, moves between an area with a signal and an area without a signal, and so on. In this case, the terminal device allows the network access module to enter the power consumption state, but the network access module needs to process these events independently, and then enters the low power consumption state; and otherwise, a system exception is caused. Therefore, in order not to cause a system exception, the querying module 621 needs to perform task query, and then performs a further operation according to a query result.

The judging module 622 is configured to judge, according to the query result of the querying module 621, whether switching from a working state to a low power consumption state may be performed. When the querying module 621 queries and finds that no ongoing task exists, the judging module 622 determines that switching from the working state to the low power consumption state may be performed; and when the querying module 621 queries and finds that an ongoing task exists, the judging module 622 determines that switching from the working state to the low power consumption state may be refused, or may wait for a period of time, and then switches to the low power consumption state after the foregoing ongoing task ends.

The switching module 623 is configured to perform switching between the working state and the low power consumption state according to a judging result of the judging module 622 and the command for waking up the network access module, where the command is received by the wake-up receiving module 612 from the terminal device..

The network service signal receiving unit 640 is configured to receive a network service signal such as an incoming call signal or a short message signal.

The terminal device wake-up unit 650 is configured to wake up, according to the network service signal, the terminal device through a GPIO pin after the network access module switches from the low power consumption state to the working state.

The feedback unit 630 is configured to feed a switching result of the switching unit 620 and an operation result of the terminal device wake-up unit 650 back to the terminal device through a GPIO pin. However, it should be noted that, when the foregoing low power consumption state includes power consumption states of multiple levels, which causes that one GPIO pin cannot represent all states of the network access module, the feedback unit 630 may use a combination of levels on multiple GPIO pins to represent all states of the network access module.

In this embodiment of the present invention, the network access module may perform power management interaction with the terminal device through a GPIO pin, and may also feed back a current state of the network access module through a GPIO pin, so that it is convenient for the terminal device to know the state of the network access module, thereby enhancing control of the network access module by the terminal device. In addition, in this embodiment of the present invention, a function that a host is woken up by an incoming call through a GPIO pin may also be implemented.

Persons of ordinary skill in the art may understand that all or a part of the processes of the methods in the foregoing embodiments may be accomplished by a computer program instructing relevant hardware. The program may be stored in a computer readable storage medium. When the program is performed, the processes of each method in the foregoing embodiments may be included. The storage medium may be a magnetic disk, an optical disk, a read-only memory (ROM), a random access memory (RAM), and so on.

The objectives, technical solutions, and beneficial effects of the present invention are described in further detail in the foregoing specific embodiments. It should be understood that the foregoing descriptions are merely specific embodiments of the present invention, but are not intended to limit the protection scope of the present invention. Any modification, equivalent replacement, or improvement made within the principle of the present invention should all fall within the protection scope of the present invention.

## Claims

1. A power management method for a network access module, wherein the method comprises:
receiving (S101), through a general purpose input output GPIO pin, a power management command sent by a terminal device (201);
enabling a network access module (202) to perform switching (S102) between a working state and a low power consumption state according to the power management command; **characterized by**
feeding (S103) a state of the network access module after switching back to the terminal device.

2. The method according to claim 1, wherein the receiving (S101), through the GPIO pin, the power management command sent by the terminal device (201) comprises:
receiving (S301), through a GPIO pin, a command for allowing the network access module (202) to enter the low power consumption state, wherein the command is sent by the terminal device (201), or
receiving (S401), through a GPIO pin, a command for waking up the network access module (202) by the terminal device (201), wherein the command is sent by the terminal device (201).

3. The method according to claim 1 or 2, wherein the enabling the network access module to perform switching (S102) between the working state and the low power consumption state according to the power management command comprises:
querying (S302), according to the command for allowing the network access module (202) to enter the low power consumption state, a current task of the network access module (202); and if it is queried and found that an ongoing task exists, waiting for processing of the task to be finished, and then switching (S305) the network access module (202) from the working state to the low power consumption state, and otherwise, if it is queried and found that no ongoing task exists, directly switching (S305) the network access module (202) from the working state to the low power consumption state; or
according to the command for waking up the network access module by the terminal device, switching (S402) the network access module from the low power consumption state to the working state.

4. The method according to any one of claims 1 to 3, wherein when the terminal device (201) is in a standby state and the network access module (202) is in the low power consumption state, the method further comprises:
if the network access module (202) receives a network service signal, switching the network access module from the low power consumption state to the working state according to the network service signal (640), and waking up the terminal device (201) through a GPIO pin; and
feeding a state of the network access module after switching back to the terminal device through a GPIO pin.

5. The method according to any one of claims 1 to 4, wherein the low power consumption state comprises:
a state in which a processor of the network access module stops working; or
a state in which the network access module receives a network side signal intermittently; or
a state in which a processor of the network access module works at a reduced frequency, an interruption that can be used for waking up is maintained, and power supply for a part of components is stopped; or
a state in which there is only a voltage but no current in the network access module, and overall power consumption is obviously reduced as compared with the working state.

6. The method according to any one of claims 1 to 5, wherein the GPIO pin for feeding back the state of the network access module and the GPIO pin for receiving the power management command are different GPIO pins.

7. A power management apparatus for a network access module, comprising:
a command receiving unit (610), configured to receive, through a GPIO pin, a power management command sent by a terminal device;
a switching unit (620), configured to enable a network access module to perform switching between a working state and a low power consumption state according to the power management command; and **characterized by**
a feedback unit (630), configured to feed a state of the network access module after switching back to the terminal device.

8. The apparatus according to claim 7, wherein the command receiving unit (610) comprises:
a low power consumption allowing module (611), configured to receive, through a GPIO pin, a command for allowing the network access module to enter the low power consumption state, wherein the command is sent by the terminal device (201); and
a wake-up receiving module (612), configured to receive, through a GPIO pin, a command for waking up the network access module (202) by the terminal device (201), wherein the command is sent by the terminal device (201).

9. The apparatus according to claim 7 or 8, wherein the switching unit (620) comprises:
a querying module (621), configured to query, according to the command for allowing the network access module (202) to enter the low power consumption state, a current task of the network access module;
a judging module (622), configured to judge, according to a query result of the querying module (621), whether switching from the working state to the low power consumption state may be performed; and if it is queried and found that an ongoing task exists, wait for processing of the task to be finished, and then perform switching from the working state to the low power consumption state, and otherwise, if it is queried and found that no ongoing task exists, directly perform switching from the working state to the low power consumption state; and
a switching module (623), configured to perform switching between the working state and the low power consumption state according to a judging result of the judging module (202) and the command for waking up the network access module, wherein the command is received by the wake-up receiving module from the terminal device (201).

10. The apparatus according to any one of claims 7 to 9, further comprising:
a network service signal receiving unit (640), configured to receive a network service signal; and
a terminal device wake-up unit (650), configured to wake up, according to the network service signal, the terminal device (201) through a GPIO pin after switching from the low power consumption state to the working state, wherein the network service signal comprises an incoming call signal or a short message signal.

11. The apparatus according to any one of claims 7 to 10, wherein the low power consumption state comprises:
a state in which a processor of the network access module stops working; or
a state in which the network access module receives a network side signal intermittently; or
a state in which a processor of the network access module works at a reduced frequency, an interruption that can be used for waking up is maintained, and power supply for a part of components is stopped; or
a state in which there is only a voltage but no current in the network access module, and overall power consumption is obviously reduced as compared with the working state.

12. The apparatus according to any one of claims 7 to 11, wherein the GPIO pin for feeding back the state of the network access module and the GPIO pin for receiving the power management command are different GPIO pins.

13. A network access module (202), comprising the apparatus according to any one of claims 7 to 12.

14. A terminal device (201), integrated with the apparatus according to any one of claims 7 to 12 or the network access module according to claim 13.

## Patentansprüche

1. Leistungsverwaltungsverfahren für ein Netzwerkzugriffsmodul, wobei das Verfahren umfasst:
Empfangen (S101) eines Leistungsverwaltungsbefehls, der von einem Endgerät (201) gesendet wird, durch einen Mehrzweck-Eingabe/Ausgabe-Kontaktstift (GPIO, *General Purpose Input Output);*
Befähigen eines Netzwerkzugriffsmoduls (202), Umschalten (S102) zwischen einem Arbeitszustand und einem Zustand niedrigen Stromverbrauchs entsprechend dem Leistungsverwaltungsbefehl durchzuführen; **gekennzeichnet durch** Rückmelden (S103) eines Zustands des Netzwerkzugriffsmoduls nach dem Umschalten an das Endgerät.

2. Verfahren nach Anspruch 1, wobei das Empfangen (S101) des Leistungsverwaltungsbefehls, der von dem Endgerät (201) gesendet wird, durch den GPIO-Kontaktstift umfasst:
Empfangen (S301) eines Befehls durch einen GPIO-Kontaktstift, dem Netzwerkzugriffsmodul (202) zu erlauben, in den Zustand niedrigen Stromverbrauchs einzutreten, wobei der Befehl von dem Endgerät (201) gesendet wird, oder
Empfangen (S401) eines Befehls durch einen GPIO-Kontaktstift, das Netzwerkzugriffsmodul (202) durch das Endgerät (201) aufzuwecken, wobei der Befehl von dem Endgerät (201) gesendet wird.

3. Verfahren nach Anspruch 1 oder 2, wobei das Befähigen des Netzwerkzugriffsmoduls, Umschalten (S102) zwischen dem Arbeitszustand und dem Zustand niedrigen Stromverbrauchs entsprechend dem Leistungsverwaltungsbefehl durchzuführen, umfasst:
Abfragen (S302) entsprechend dem Befehl, dem Netzwerkzugriffsmodul (202) zu erlauben, in den Zustand niedrigen Stromverbrauchs einzutreten, einer aktuellen Aufgabe des Netzwerkzugriffsmoduls (202); und wenn es abgefragt und festgestellt wird, dass eine laufende Aufgabe vorliegt, darauf Warten, dass das Verarbeiten der Aufgabe beendet ist, und danach Umschalten (S305) des Netzwerkzugriffsmoduls (202) von dem Arbeitszustand in den Zustand niedrigen Stromverbrauchs, und andernfalls, wenn es abgefragt und festgestellt wird, dass keine laufende Aufgabe vorliegt, direktes Umschalten (S305) des Netzwerkzugriffsmoduls (202) von dem Arbeitszustand in den Zustand niedrigen Stromverbrauchs; oder
entsprechend dem Befehl, das Netzwerkzugriffsmodul durch das Endgerät aufzuwecken, Umschalten (S402) des Netzwerkzugriffsmoduls von dem Zustand niedrigen Stromverbrauchs in den Arbeitszustand.

4. Verfahren nach irgendeinem der Ansprüche 1 bis 3, wobei, wenn das Endgerät (201) in einem Wartezustand ist und das Netzwerkzugriffsmodul (202) in dem Zustand niedrigen Stromverbrauchs ist, das Verfahren ferner umfasst:
wenn das Netzwerkzugriffsmodul (202) ein Netzwerkdienstsignal empfängt, Umschalten des Netzwerkzugriffsmoduls von dem Zustand niedrigen Stromverbrauchs in den Arbeitszustand entsprechend dem Netzwerkdienstsignal (640) und Aufwecken des Endgeräts (201) durch einen GPIO-Kontaktstift; und Rückmelden eines Zustands des Netzwerkzugriffsmoduls nach dem Umschalten an das Endgerät durch einen GPIO-Kontaktstift.

5. Verfahren nach irgendeinem der Ansprüche 1 bis 4, wobei der Zustand niedrigen Stromverbrauchs umfasst:
einen Zustand, in welchem ein Prozessor des Netzwerkzugriffsmoduls aufhört zu arbeiten; oder
einen Zustand, in welchem das Netzwerkzugriffsmodul ein Signal seitens des Netzwerks periodisch empfängt; oder
einen Zustand, in welchem ein Prozessor des Netzwerkzugriffsmoduls mit einer reduzierten Frequenz arbeitet, eine Unterbrechung, die zum Aufwecken verwendet werden kann, aufrechterhalten wird, und eine Stromversorgung für einen Teil der Komponenten gestoppt wird; oder
einen Zustand, in welchem es nur eine Spannung, aber keinen Strom in dem Netzwerkzugriffsmodul gibt und der gesamte Stromverbrauch im Verhältnis zu dem Arbeitszustand offensichtlich reduziert ist.

6. Verfahren nach irgendeinem der Ansprüche 1 bis 5, wobei der GPIO-Kontaktstift zum Rückmelden des Zustands des Netzwerkzugriffsmoduls und der GPIO-Kontaktstift zum Empfangen des Leistungsverwaltungsbefehls unterschiedliche GPIO-Kontaktstifte sind.

7. Leistungsverwaltungseinrichtung für ein Netzwerkzugriffsmodul, umfassend:
eine Befehlsempfangseinheit (610), die ausgestaltet ist, einen Leistungsverwaltungsbefehl, der von einem Endgerät gesendet wird, durch einen GPIO-Kontaktstift zu empfangen;
eine Umschalteinheit (620), die ausgestaltet ist, ein Netzwerkzugriffsmodul zu befähigen, Umschalten zwischen einem Arbeitszustand und einem Zustand niedrigen Stromverbrauchs entsprechend dem Leistungsverwaltungsbefehl durchzuführen; und
**gekennzeichnet durch**
eine Rückmeldeeinheit (630), die ausgestaltet ist, einen Zustand des Netzwerkzugriffsmoduls nach dem Umschalten an das Endgerät zurückzumelden.

8. Einrichtung nach Anspruch 7, wobei die Befehlsempfangseinheit (610) umfasst:
ein Modul zum Ermöglichen niedrigen Stromverbrauchs (611), das ausgestaltet ist, einen Befehl, dem Netzwerkzugriffsmodul zu erlauben, in den Zustand niedrigen Stromverbrauchs einzutreten, durch einen GPIO-Kontaktstift zu empfangen, wobei der Befehl von dem Endgerät (201) gesendet wird; und
ein Aufweck-Empfangsmodul (612), das ausgestaltet ist, einen Befehl, das Netzwerkzugriffsmodul (202) durch das Endgerät (201) aufzuwecken, durch einen GPIO-Kontaktstift zu empfangen, wobei der Befehl von dem Endgerät (201) gesendet wird.

9. Einrichtung nach Anspruch 7 oder 8, wobei die Umschalteinheit (620) umfasst:
ein Abfragemodul (621), das ausgestaltet ist, entsprechend dem Befehl, dem Netzwerkzugriffsmodul (202) zu erlauben, in den Zustand niedrigen Stromverbrauchs einzutreten, eine aktuelle Aufgabe des Netzwerkzugriffsmoduls abzufragen;
ein Beurteilungsmodul (622), das ausgestaltet ist, entsprechend einem Abfrageergebnis des Abfragemoduls (621) zu beurteilen, ob Umschalten von dem Arbeitszustand in den Zustand niedrigen Stromverbrauchs durchgeführt werden kann; und, wenn es abgefragt und festgestellt wird, dass eine laufende Aufgabe vorliegt, darauf zu warten, bis das Verarbeiten der Aufgabe beendet ist, und danach Umschalten von dem Arbeitszustand in den Zustand niedrigen Stromverbrauchs durchzuführen, und andernfalls, wenn es abgefragt und festgestellt wird, dass keine laufende Aufgabe vorliegt, direkt Umschalten von dem Arbeitszustand in den Zustand niedrigen Stromverbrauchs durchzuführen; und
ein Umschaltmodul (623), das ausgestaltet ist, Umschalten zwischen dem Arbeitszustand und dem Zustand niedrigen Stromverbrauchs entsprechend einem Beurteilungsergebnis des Beurteilungsmoduls (622) und dem Befehl, das Netzwerkzugriffsmodul aufzuwecken, durchzuführen, wobei das Aufweck-Empfangsmodul den Befehl von dem Endgerät (201) empfängt.

10. Einrichtung nach irgendeinem der Ansprüche 7 bis 9, ferner umfassend:
eine Netzwerkdienstsignal-Empfangseinheit (640), die ausgestaltet ist, ein Netzwerkdienstsignal zu empfangen; und
eine Endgerät-Aufweckeinheit (650), die ausgestaltet ist, das Endgerät (201) entsprechend dem Netzwerkdienstsignal durch einen GPIO-Kontaktstift nach dem Umschalten von dem Zustand niedrigen Stromverbrauchs in den Arbeitszustand aufzuwecken, wobei das Netzwerkdienstsignal ein Signal eines ankommenden Anrufs oder ein Signal einer Kurznachricht umfasst.

11. Einrichtung nach irgendeinem der Ansprüche 7 bis 10, wobei der Zustand niedrigen Stromverbrauchs umfasst:
einen Zustand, in welchem ein Prozessor des Netzwerkzugriffsmoduls aufhört zu arbeiten; oder
einen Zustand, in welchem das Netzwerkzugriffsmodul ein Signal seitens des Netzwerks periodisch empfängt; oder
einen Zustand, in welchem ein Prozessor des Netzwerkzugriffsmoduls mit einer reduzierten Frequenz arbeitet, eine Unterbrechung, die zum Aufwecken verwendet werden kann, aufrechterhalten wird, und eine Stromversorgung für einen Teil der Komponenten gestoppt wird; oder
einen Zustand, in welchem es nur eine Spannung, aber keinen Strom in dem Netzwerkzugriffsmodul gibt und der gesamte Stromverbrauch im Verhältnis zu dem Arbeitszustand offensichtlich reduziert ist.

12. Einrichtung nach irgendeinem der Ansprüche 7 bis 11, wobei der GPIO-Kontaktstift zum Rückmelden des Zustands des Netzwerkzugriffsmoduls und der GPIO-Kontaktstift zum Empfangen des Leistungsverwaltungsbefehls unterschiedliche GPIO-Kontaktstifte sind.

13. Netzwerkzugriffsmodul (202), das eine Einrichtung nach irgendeinem der Ansprüche 7 bis 12 umfasst.

14. Endgerät (201), das in die Einrichtung nach irgendeinem der Ansprüche 7 bis 12 oder in das Netzwerkzugriffsmodul nach Anspruch 13 integriert ist.

## Revendications

1. Procédé de gestion d'énergie pour un module d'accès réseau, où le procédé comprend les étapes suivantes :
recevoir (S101), par l'intermédiaire d'une broche d'entrée-sortie à usage général (GPIO), une commande de gestion d'énergie envoyée par un dispositif de terminal (201) ;
autoriser un module d'accès réseau (202) à exécuter une commutation (S102) entre un état de travail et un état de faible consommation d'énergie conformément à la commande de gestion d'énergie ; **caractérisé par** l'étape suivante :
alimenter (S103) un état du module d'accès réseau après avoir commuté vers le dispositif de terminal.

2. Procédé selon la revendication 1, dans lequel la réception (S101), par l'intermédiaire de la broche GPIO, de la commande de gestion d'énergie envoyée par le dispositif de terminal (201) comprend les étapes suivantes :
recevoir (S301), par l'intermédiaire d'une broche GPIO, une commande pour permettre au module d'accès réseau (202) d'entrer dans l'état de faible consommation d'énergie, où la commande est envoyée par le dispositif de terminal (201), ou
recevoir (S401), par l'intermédiaire d'une broche GPIO, une commande pour réveiller le module d'accès réseau (202) par l'intermédiaire du dispositif de terminal (201), où la commande est envoyée par l'intermédiaire du dispositif de terminal (201).

3. Procédé selon la revendication 1 ou la revendication 2, dans lequel l'autorisation donnée au module d'accès réseau d'exécuter une commutation (S102) entre l'état de travail et l'état de faible consommation d'énergie conformément à la commande de gestion d'énergie, comprend les étapes suivantes :
interroger (S302), conformément à la commande autorisant le module d'accès réseau (202) à entrer en état de faible consommation d'énergie, une tâche en cours du module d'accès réseau (202) ; et, s'il est demandé et trouvé qu'une tâche en cours existe, attendre que le traitement de la tâche soit fini, puis commuter (S305) le module d'accès réseau (202) de l'état de travail à l'état de faible consommation d'énergie, et dans le cas contraire, s'il est demandé et trouvé qu'aucune tâche en cours n'existe, commuter directement (S305) le module d'accès réseau (202) de l'état de travail à l'état de faible consommation d'énergie ; ou
conformément à la commande pour réveiller le module d'accès réseau par l'intermédiaire du dispositif de terminal, commuter (S402) le module d'accès réseau de l'état de faible consommation d'énergie à l'état de travail.

4. Procédé selon l'une quelconque des revendications 1 à 3, dans lequel lorsque le dispositif de terminal (201) est en état d'attente et que le module d'accès réseau (202) est en état de faible consommation d'énergie, le procédé comprend en outre les étapes suivantes :
si le module d'accès réseau (202) reçoit un signal de service de réseau, commuter le module d'accès réseau de l'état de faible consommation d'énergie à l'état de travail conformément au signal de service de réseau (640), et réveiller le dispositif de terminal (201) par l'intermédiaire d'une broche GPIO ; et
alimenter un état du module d'accès réseau après avoir commuté vers le dispositif de terminal par l'intermédiaire d'une broche GPIO.

5. Procédé conformément à l'une quelconque des revendications 1 à 4, dans lequel l'état de faible consommation d'énergie comprend :
un état dans lequel un processeur du module d'accès réseau arrête de travailler ; ou
un état dans lequel le module d'accès réseau reçoit un signal côté réseau de manière intermittente ; ou
un état dans lequel un processeur du module d'accès réseau travaille à une fréquence réduite, dans lequel une interruption qui peut être utilisée pour réveiller est maintenue, et dans lequel une alimentation d'énergie pour une partie des composants est arrêtée ; ou
un état dans lequel il existe seulement une tension mais aucun courant dans le module d'accès réseau, et dans lequel une consommation d'énergie globale est, évidemment, réduite par rapport à l'état de travail.

6. Procédé selon l'une quelconque des revendications 1 à 5, dans lequel la broche GPIO pour réalimenter l'état du module d'accès réseau et la broche GPIO pour recevoir la commande de gestion d'énergie sont des broches GPIO différentes.

7. Appareil de gestion d'énergie pour un module d'accès réseau, comprenant :
une unité de réception de commande (610), configurée pour recevoir, par l'intermédiaire d'une broche GPIO, une commande de gestion d'énergie envoyée par un dispositif de terminal ;
une unité de commutation (620), configurée pour autoriser un module d'accès réseau à exécuter une commutation entre un état de travail et un état de faible consommation d'énergie conformément à la commande de gestion d'énergie ; et **caractérisé par** :
une unité d'alimentation (630), configurée pour alimenter un état du module d'accès réseau après avoir commuté vers le dispositif de terminal.

8. Appareil selon la revendication 7, dans lequel l'unité de réception de commande (610) comprend :
un module d'autorisation de faible consommation d'énergie (611), configuré pour recevoir, par l'intermédiaire d'une broche GPIO, une commande pour autoriser le module d'accès réseau à entrer en état de faible consommation d'énergie, où la commande est envoyée par le dispositif de terminal (201) ; et
un module de réception de réveil (612), configuré pour recevoir, par l'intermédiaire d'une broche GPIO, une commande pour réveiller le module d'accès réseau (202) par l'intermédiaire du dispositif de terminal (201), où la commande est envoyée par l'intermédiaire du dispositif de terminal (201).

9. Appareil selon la revendication 7 ou la revendication 8, dans lequel l'unité de commutation (620) comprend :
un module de demande (621), configuré pour interroger, conformément à la commande pour autoriser le module d'accès réseau (202) à entrer en état de faible consommation d'énergie, une tâche en cours du module d'accès réseau ;
un module de jugement (622), configuré pour juger, conformément à un résultat de demande du module de demande (621), si une commutation de l'état de travail à l'état de faible consommation d'énergie peut être exécutée ; et s'il est demandé et trouvé qu'une tâche en cours existe, attendre que le traitement de la tâche soit fini, puis exécuter une commutation de l'état de travail à l'état de faible consommation d'énergie, et dans le cas contraire, s'il est demandé et trouvé qu'aucune tâche en cours n'existe, exécuter directement une commutation de l'état de travail à l'état de faible consommation d'énergie ; et
un module de commutation (623), configuré pour exécuter une commutation entre l'état de travail et l'état de faible consommation d'énergie conformément au résultat de jugement du module de jugement (622) et à la commande pour réveiller le module d'accès réseau, où la commande est reçue par le module de réception de réveil depuis de dispositif de terminal (201).

10. Appareil selon l'une quelconque des revendications 7 à 9, comprenant en outre :
une unité de réception de signal de service de réseau (640), configurée pour recevoir un signal de service de réseau ; et
une unité de réveil de dispositif de terminal (650), configurée pour réveiller, conformément au signal de service de réseau, le dispositif de terminal (201), par l'intermédiaire d'une broche GPIO après avoir commuté de l'état de faible consommation d'énergie à l'état de travail, où le signal de service de réseau comprend un signal d'appel entrant ou un signal de message court.

11. Appareil selon l'une quelconque des revendications 7 à 10, dans lequel l'état de faible consommation d'énergie comprend :
un état dans lequel un processeur du module d'accès réseau arrête de travailler ; ou
un état dans lequel le module d'accès réseau reçoit un signal côté réseau de manière intermittente ; ou
un état, dans lequel un processeur du module d'accès réseau travaille à une fréquence réduite, dans lequel une interruption qui peut être utilisée pour réveiller est maintenue, et dans lequel une alimentation d'énergie pour une partie des composants est arrêtée ; ou
un état dans lequel il existe seulement une tension mais aucun courant dans le module d'accès réseau, et dans lequel une consommation d'énergie globale est, évidemment, réduite par rapport à l'état de travail.

12. Appareil selon l'une quelconque des revendications 7 à 11, dans lequel la broche GPIO pour réalimenter l'état du module d'accès réseau et la broche GPIO pour recevoir la commande de gestion d'énergie sont des broches GPIO différentes.

13. Module d'accès réseau (202), comprenant l'appareil selon l'une quelconque des revendications 7 à 12.

14. Dispositif de terminal (201), intégré à l'appareil selon l'une quelconque des revendications 7 à 12 ou le module d'accès réseau selon la revendication 13.
